# EUROPEAN PATENT APPLICATION

(11) **EP 1 443 349 A1**
(43) Date of publication of application: **04.08.2004**
(21) Application number: 03290246.2
(22) Date of filing: 31.01.2003
(51) Int. Cl.: G02B 6/34

(54) **Compact arrayed waveguide grating device**

(71) Applicant: Alcatel Optronics France, 75008 Paris (FR)
(72) Inventor: Hamoir, Dominique, 91600 Nozay (FR)
(74) Representative: Cabinet Hirsch

(57) **Abstract**

An Arrayed Waveguide Grating (AWG) device comprises a substrate (S) having first (C1) and second (C2) slab couplers defined thereon, an input/output side (SS), a first array (DWA1) of waveguides defined thereon and optically coupled to first ends (CE11,CE21) of the first and second slab couplers, and second (IWA2) and third (OWA3) arrays of waveguides defined thereon and comprising first ends (IWE1,OWE1) abutting upon the input/output side (SS) and second ends (IWE2,OWE2) respectively optically coupled to second ends (CE12,CE22) of the first (C1) and second (C2) slab couplers. The AWG device also comprises a single support means (FA) having a coupling side (FAS) facing the input/output side (SS) and provided with portions of first (IFG) and second (OFG) groups of at least one input/output external waveguide having first ends (IFE1,OFE1) abutting upon the coupling side (FAS) and being arranged so that at least one external waveguide of the first group (IFG) be optically coupled to one second array waveguide and at least one external waveguide of the second group (OFG) be optically coupled to a corresponding one of the third array waveguides.

## Description

The present invention relates to optical devices for telecommunication networks, and more particularly to Arrayed Waveguide Grating (AWG) devices.

As it is known by one skilled in the art, AWG devices are optical devices that have been conceived to allow utilization of the bandwidth in communication networks, and more precisely to separate (or demultiplex) or group together (or multiplex) carrier channels of different wavelengths outputted by or to be launched in a waveguide such as an optical fibre. In other words, an AWG device can be used as a multiplexer or demultiplexer.

An AWG device is a planar structure comprising a substrate having first and second "slab" (or "star") couplers defined thereon, a first array of waveguides defined thereon and optically coupled to the first ends of the first and second slab couplers, and second and third arrays of waveguides defined thereon and comprising first ends, abutting upon one or two input/output (cleaved facet) sides of the substrate and in general respectively spaced one from the other by a constant spacing, and second ends respectively optically coupled to second ends of the first and second slab couplers. These waveguide arrays and slab couplers together act like a diffraction grating and associated spatial filters to separate or group together the wavelengths that are introduced and collected through the input/output cleaved facet sides by two groups of external waveguides (for example optical fibres) whose first ends are carried by two separate support means (sometimes named fibre arrays).

In a first embodiment the two separate support means are fixed to the substrate while respectively facing two of its opposite input/output cleaved facet sides. In a second embodiment the two separate support means are fixed to the substrate while facing one of its input/output cleaved facet sides. This second embodiment is more compact than the first one, but for certain applications it is still too much bulky and expensive.

The object of this invention is therefore to overcome this drawback.

For this purpose, it provides an AWG device comprising :
- a substrate having first and second slab couplers defined thereon, an input/output side, a first array of waveguides defined thereon and optically coupled to the first ends of the first and second slab couplers, and second and third arrays of waveguides defined thereon and comprising first ends abutting upon the input/output side and second ends respectively optically coupled to second ends of the first and second slab couplers, and
- a single support means having a coupling side facing the input/output side and provided with portions of first and second groups of at least one input/output external waveguides having first ends abutting upon this coupling side, and being arranged so that at least one external waveguide of the first group be optically coupled to one second array waveguide and at least one external waveguide of the second group be optically coupled to a corresponding one of the third array waveguides.

The external waveguides may be optical fibres, and in that case the support means is preferably a holding block (also named fibre array), or waveguides belonging to a planar circuit such as a planar lightwave circuit (PLC), and in that case the support means is preferably a chip on which are defined the PLC and the external waveguides.

The AWG device according to the invention may include additional characteristics considered separately or combined and notably :
- a first one of the second array waveguide first ends is preferably placed at a chosen distance from a first one of the third array waveguide first ends, and a first one of the first group external waveguide first ends is placed at this chosen distance from a first one of the second group external waveguide first ends,
- the first ends of the second and third array waveguides are respectively spaced one from the other by a constant spacing, the first ends of the first and second group external waveguides are respectively spaced one from the other by the same constant spacing, and the first, second and third waveguide arrays and the first and second slab couplers advantageously define a vernier,
- in a first embodiment including the vernier, the spacing between the third array waveguide first ends is approximately equal to the spacing between said second array waveguide first ends. The spacing between the third array waveguide second ends may be equal or not to the spacing between said second array waveguide second ends. In case of inequality, the first waveguide array generally acts as a lens when it is not symmetrical. When a vernier is defined, and when the second array comprises at least 1 + p waveguides and the second group comprises M external waveguides (the AWG is thus designed for multiplexing or demultiplexing M channels), then the third array preferably comprises at least M + p waveguides and the first group comprises at least one (1) external waveguide,
- in a second embodiment also including the vernier the spacing between the third array waveguide first ends is not necessarily equal to the spacing between the second array waveguide first ends. In that case, when the second array comprises 1 + p waveguides and the third array comprises at least M + p waveguides, the first group preferably comprises at least 1+ p external waveguides and the second group preferably comprises at least M + p external waveguides.

The invention also relates to a method of coupling an AWG substrate to input/output external waveguides, comprising the steps of :
- providing a substrate having first and second slab couplers defined thereon, an input/output side, a first array of waveguides defined thereon and optically coupled to the first ends of the first and second slab couplers, and second and third arrays of waveguides defined thereon and comprising first ends abutting upon the input/output side and second ends respectively optically coupled to second ends of the first and second slab couplers,
- providing a single support means having a coupling side and provided with portions of first and second groups of at least one input/output external waveguides having first ends abutting upon the coupling side,
- pre-positioning the support means so that its coupling side faces the input/output side,
- finely moving the support means along the substrate to find a position in which at least one external waveguide of the first group is optically coupled to one second array waveguide and at east one external waveguide of the second group is optically coupled to a corresponding one of the third array waveguides, and
- fixing the support means to the substrate in the found position.

The method according to the invention may include additional characteristics considered separately or combined and notably :
- a pre-positioning made by machine-vision,
- a fine moving controlled by optical power monitoring,
- an optical power monitoring comprising a sub-step of determining a maximum of optical power at the output (second ends) of the second group external waveguides by moving the support means relatively to the substrate in a first plane, and a second step of determining a maximum of optical power at the output (second ends) of the second group external waveguides by moving the support means relatively to the substrate in a direction perpendicular to the first plane,
- a fine moving comprising a rotation sub-step of the support means along a chosen direction, for example the first end fibre axis when the external waveguides are optical fibres,
- a possible iteration of at least a part of the fine moving,
- a support means fixed by gluing (or pasting) or welding (or soldering) or brazing.

Other features and advantages of the invention will become apparent on examining the detailed specifications hereafter and the appended drawings, wherein :
- figure 1 schematically illustrates an AWG device according to the invention, and
- figure 2 illustrates a detail of the AWG device of figure 1.

The appended drawings may not only serve to complete the invention, but also to contribute to its definition, if need be.

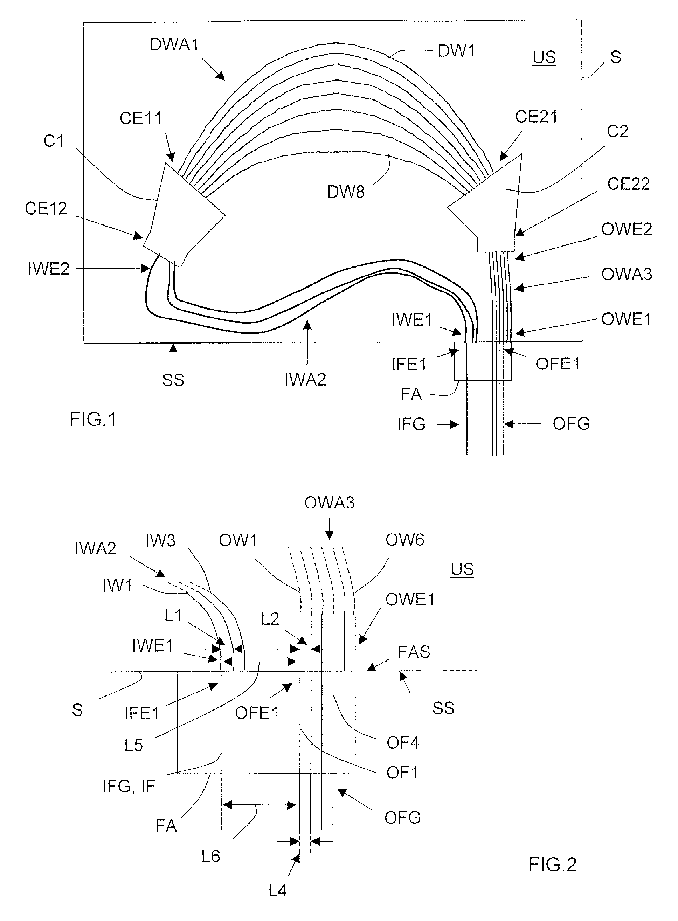

Reference is made to figures 1 and 2 to describe an Arrayed Waveguide Grating (AWG) device according to the invention, in a non-limiting embodiment.

The AWG device illustrated in figure 1 comprises a substrate S made of semiconductor, such as InP or silicon (Si), or silica, or else SiON, for example. This substrate S, which is a planar structure, can be also a hybridized component. The upper surface US of this substrate S is provided with first C1 and second C2 slab (or star) couplers, having first CE11, CE21 and second CE12, CE22 ends, and three arrays of waveguides DWA1, IWA2 and OWA3.

The first waveguide array DWA1 comprises a multiplicity of single mode waveguides DWi (where i = 1 to 8 in this example) whose opposite ends are optically coupled to first ends CE11, CE21 of the first C1 and second C2 slab couplers.

There is a predetermined optical path length difference between the lengths of adjacent waveguides DWi of the first array DWA1 which determines the physical position where the wavelength is outputted at the second end CE22 of the second slab coupler C2. Typically, the physical length of the waveguides increases incrementally by the same amount, ΔL = mλ_{c}/n_{c}, from one waveguide to the next, where λ_{c} is the central wavelength of the grating, n_{c} is the effective refractive index of the waveguides DWi, and m is a constant.

The second waveguide array IWA2 comprises a multiplicity of (preferably single-mode) waveguides IWj (where j = 1 to 3 in this example) having first ends IWE1, abutting upon an input/output side SS of the substrate S and spaced one from the other by respective spacings L1j that may be constant in certain embodiments, and second ends IWE2 optically coupled to the second end CE12 of the first slab coupler C1. The second ends IWE2 of the second array waveguides IWj are spaced one from the other by respective spacings L'1j that may be constant in certain embodiments.

The input/output side SS of the substrate S is preferably a cleaved facet sensibly perpendicular to or with a slight angle (typically 5° to 10°) with respect to the upper surface US.

The third waveguide array OWA3 comprises a multiplicity of single mode waveguides OWk (where k = 1 to 6 in this example) having first ends OWE1, abutting upon the input/output side SS of the substrate S and spaced one from the other by respective spacings L2k that may be constant in certain embodiments, and second ends OWE2 optically coupled to the second end CE22 of the first slab coupler C2. The second ends OWE2 of the second array waveguides OWk are spaced one from the other by respective spacings L'2k that may be constant in certain embodiments (which is in principle different from L'1j in the case where the vernier principle is used, as will be explained below). Moreover, the spacings L2k (respectively L1j) may be constant and equal to a spacing L2* (respectively L1*) or not. L2k (respectively L1j) is equal to L2* (respectively L1*) when all the L2k (respectively L1j) are the same. More, L1* and L2* may be equal or different as will be explained below.

The AWG device also comprises a single support means which is, in the illustrated example, a holding block FA, also named fibre array because it is provided for holding portions of optical fibres defining external waveguides. But the invention is not limited to support means of the fibre array type. It could effectively be, for example, a chip defining a planar circuit, such as a planar lightwave circuit (PLC), comprising external waveguides.

This support means has an upper surface on which are fixed end portions of two groups of external waveguides IFG, OFG. When the support means is a fibre array FA, the external waveguides are optical fibres and the groups of optical fibres are usually named fibre ribbons. More precisely, the first group of optical fibre(s) IFG comprises at least one optical fibre IFm (where m = 1 in this example) having first end IFE1 abutting upon a coupling side FAS of the fibre array FA, and the second group of optical fibre OFG comprises at least one optical fibre OFn (where n = 1 to 4 in this example) having first end OFE1 abutting upon the coupling side FAS of the fibre array FA.

The coupling side FAS of the fibre array FA is preferably a cleaved facet sensibly perpendicular to its upper surface and facing the input/output side SS of the substrate S.

Moreover, when the first group IFG comprises more than two optical fibres IFm, these optical fibres may be spaced one from the other by a constant spacing L3, especially when the vernier principle is used. In the same way, when the second group OFG comprises more than two optical fibres OFn, these optical fibres may be spaced one from the other by a constant spacing L4, especially when the vernier principle is used. But, this is not mandatory. Moreover, the spacings L3 and L4 may be equal, especially when the vernier principle is used. But, this is not mandatory.

The optical fibres of the first IFG and second OFG groups are arranged on the fibre array FA in order that at least one optical fibre IFm of the first group IFG be optically coupled to a corresponding waveguide IWj of the second array IWA2, and at least one optical fibre OFn of the second group OFG be optically coupled to a corresponding waveguide OWk of the third array OWA3, when the fibre array FA is definitely fixed to the substrate S in a chosen position.

The first DWA1, second IWA2 and third OWA3 waveguide arrays preferably define together with the first C1 and second C2 slab couplers what is named a "vernier" by one skilled in the art. The vernier principle is used for matching the AWG structure with the International Telecommunications Union (ITU) frequency grid by selecting appropriate set of input/output waveguides (IWj, OWk). It is important to notice that according to the application, the AWG structure way be a demultiplexer or a multiplexer, or else a demultiplexer/multiplexer. Consequently, when the first group IFG of optical fibres is an input (respectively output) group, the second group OFG of optical fibres is an output (respectively input) group.

The second ends IWE2 of the second array waveguides IWj are separated by the distance L'1 that corresponds on the diffraction pattern to a signal-frequency-spacing plus (or minus) a fraction δ of it. In the same time, the number of third array waveguides OWk is greater than the number M of transmission channels of different modulated wavelengths that carry the multiplexed signals launched by the second array waveguides IWj into the first coupler C1, and the second ends OWE2 of third array waveguides OWk are separated by the distance L'2 that corresponds exactly on the diffraction pattern to a signal-frequency-spacing (L'1 = L'2 + δ). For example, there are M = 40 multiplexed channels to demultiplex and 44 third array waveguides OWk.

A "constant spacing" L'1 (respectively L'2) between the second ends IWE2 of the second array waveguides IWj (respectively second ends OWE2 of the third array waveguides OWk) means that the separation of the channels to demultiplex is constant in the frequency domain (in terms of GHz) and respects the ITU grid, but it may be not strictly constant in space as the frequency-space relationship could be not exactly linear.

In the case where a vernier is defined and where the spacings L1, L2, L3 and L4 are respectively constant (which is not mandatory), when the fibre array FA (and then the first IFG and second OFG optical fibre groups) is displaced by ± L1 the diffraction pattern of the AWG, at the second end CE22 of the second slab coupler C2, is spatially shifted by plus or minus one waveguide-to-waveguide spacing L'2 plus or minus one fraction of it. But, in the same time the displacement of the second optical fibre group OFG spatially shifts the points of the second end CE22 of the second coupler C2, where wavelengths are physically collected by the third array waveguides OWk, by exactly one waveguide-to-waveguide spacing L'2. So, the diffraction pattern is spatially shifted by one fraction δ of the waveguide-to-waveguide spacing L'2 with respect to the light (wavelengths) collecting points. The AWG structure being shifted in frequency by one fraction of the frequency channel spacing, such displacements are used to tune the AWG to match the ITU frequency grid with a precision equal to half this fraction of frequency channel spacing.

It will now be described how the chosen position is determined according to the invention.

In a first step, the substrate S, provided with the three waveguide arrays (DWA1, IWA2 and OWA3) and the two slab couplers (C1 and C2), is maintained in a fixed position, while the fibre array FA, provided with the portions of the two optical fibre groups (IFG and OFG), is pre-positioned in order that its coupling side FAS faces the input/output cleaved facet side SS of the substrate S till the first group optical fibre(s) IFm be roughly in front of the second array waveguides IWj and the second group optical fibre(s) OFn be roughly in front of the third array waveguides OWk.

This pre-positioning can be made by machine-vision or any equivalent positioning technique known in the art.

In a second step, the fibre array FA is finely moved along the substrate S to find a position in which at least one (and preferably each) optical fibre IFm of the first group IFG is optically coupled to one waveguide IWj of the second array IWA2 and at least one (and preferably each) optical fibre OFn of the second group OFG is optically coupled to a corresponding waveguide OWk of the third array OWA3.

This fine moving can be controlled by optical power monitoring or any equivalent technique known in the art. In the case of an optical power monitoring one can first determine a first maximum of optical power at the output (second ends opposed to the first ones OFE1) of the second group optical fibres OFG by moving the fibre array FA relatively to the substrate S in a plane XY (parallel to the input/output side SS), and then determine a second maximum of optical power still at the output (second ends) of the second group optical fibres OFG by moving step by step the fibre array FA relatively to the substrate S in a direction Z perpendicular to the XY plane (and parallel to the axis of the optical fibre first end) while keeping this fibre array FA in the XY plane.

This operation can be followed by a rotation, preferably around the Z axis. It is also possible to iterate (at least one time) at least a part of the fine moving (and preferably the step-by-step moving and the rotation) till a satisfactory second maximum is found.

When the second maximum is definitely determined, the chosen (or "final") position is found and the fibre array FA can be fixed to the substrate S, for example by gluing (or pasting) or welding (or soldering) or brazing, or any equivalent technique known in the art.

Figures 1 and 2 illustrate an example of AWG device in which all the spacing (L1 to L4) between waveguide first ends of the second IWA2 and third OWA3 arrays and optical fibre first ends of the first IFG and second OFG groups are approximately the same, and the distance L5 between the first waveguides IW1 and OW1 of the second IWA2 and third OWA3 arrays is approximately equal to the distance L6 between the first optical fibres IF and OF1 of the first IFG and second OFG groups. Moreover, in the illustrated example the first group IFG comprises only one optical fibre IF (m = 1). But m could be greater than one (1).

So, three different final positions may be determined.

In a first position (illustrated in figures 1 and 2) the unique optical fibre IF of the first group IFG is optically coupled to a the first waveguide IW1 of the second array IWA2, and each optical fibre OF1 to OF4 of the second group OFG is optically coupled to a corresponding waveguide OW1 to OW4 of the third array OWA3. In this first position, when multiplexed signals, carried by four transmission channels of different modulated wavelengths, reach the first end IFE1 of the optical fibre IF of the first group IFG, they are launched in the first end IWE1 of the first waveguide IW1 of the second array IWA2. The multiplexed signals travel inside IW1 and reach its second end IWE2. Then the signal lightbeam expands through the first coupler C1. The multiplexed channels are outputted at the first ends of the first DW1 to fourth DW4 waveguides of the first array DWA1, travel inside DW1 to DW4 and reach the first end CE21 of the second coupler C2. Then the four resulting lightbeams expand again through the second coupler C2. A diffraction pattern (or interference pattern) forms at the second end CE22 of the second coupler C2. This diffraction pattern spatially separates the channels. The second ends OWE2 of the first OW1 to fourth OW4 waveguides of the third array OWA3 do select each a part of the spatially-separated optical spectrum, with respective central frequencies forming a frequency-selection grid. The four ITU channels are selectively coupled into respectively the first OW1 to fourth OW4 waveguides of the third array OWA3 (and hence demultiplexed) if (and only if) the AWG structure is matched to the ITU frequency grid (i.e. the frequency-selection grid matches the ITU grid). In that case, the four different channels are respectively launched into the first OW1 to fourth OW4 waveguides of the third array OWA3 through their second ends OWE2. Then they respectively travel inside OW1 to OW4, reach their first ends OWE1 and are respectively launched inside the first OF1 to fourth OF4 optical fibres of the second group OFG.

In a second position the unique optical fibre IF of the first group IFG is optically coupled to the second waveguide IW2 of the second array IWA2, and each optical fibre OF1 to OF4 of the second group OFG is optically coupled to a corresponding waveguide OW2 to OW5 of the third array OWA3. In this second position, the frequency selection grid is shifted by delta (δ) with respect to the first position.

In a third position the unique optical fibre IF of the first group IFG is optically coupled to the third waveguide IW3 of the second array IWA2, and each optical fibre OF1 to OF4 of the second group OFG is optically coupled to a corresponding waveguide OW3 to OW6 of the third array OWA3. In this third position, the frequency selection grid is shifted by delta (δ) with respect to the second position (and by 2δ with respect to the first position).

In the above described example of AWG device embodiment, M channels (M = 4 in the example) can be demultiplexed (or multiplexed) by the AWG structure and the unique fibre array FA holds M + 2 optical fibres. So, the different spacings L1 to L4 of the waveguide first ends (IWE1 and OWE1) and optical fibre first ends (IFE1 and OFE1) required to be equal. More generally, in this type of embodiment when the second array IWA2 comprises at least 1 + p waveguides IWj and the second group OFG comprises M optical fibres OFn, then the third array OWA3 preferably comprises at least M + p waveguides OWk and the first group IFG comprises at least one (1) optical fibre IFm.

But at least one other embodiment can be envisaged. If the first array DWA comprises N waveguides DWi (with N ≥ M) and the fibre array FA holds a first group IFG comprising (1+ p) optical fibres IFm and a second group OFG comprising (M + p) optical fibres OFn, the spacings L1 and L2 of the first ends IWE1 and OWE1 respectively of the second IWA2 and third OWA3 groups can be different. In that case the second array IWA2 comprises 1+ p waveguides IWj and the third array OWA3 comprises at least M + p waveguides OWk. In this type of embodiment, it is more generally possible to have non constant spacings L1j, L2j, L3j and L4j if L1 j = L3j and L2j = L4j.

Thanks to the invention, the two groups of optical fibres that are optically coupled to the AWG structure are now held by a unique fibre array. It involves a compactness reduction and a cost reduction in terms i) of number of fibre arrays to use, ii) manufacturing time and yield, and iii) manufacturing machine (less complex).

The invention also greatly simplifies the micro-positioning. The number of degrees of freedom for which optimisation is necessary is divided by two. Consequently the duration of the alignment process is also dramatically reduced. Moreover, the optical power collected at the output of the optical fibres being a gaussian with respect to X and Y directions, the width of the gaussian can be divided by a factor of two. This results in an increase in the dynamics of the monitoring signal used for the fine positioning step. In consequence the sensitivity of this step is increased. The maximum of optical power is easier to locate, which saves time and results in a better positioning, without the precision of the machine-vision used for pre-positioning needing to be improved.

In addition, the risk of breaking the AWG structure (substrate) during the micro-positioning is reduced because only one fibre array is manipulated close to it.

The invention is not limited to the embodiments of telecommunication network, broadcast multicast service server and method described above, only as examples, but it encompasses all alternative embodiments which may be considered by one skilled in the art within the scope of the claims hereafter.

So, it has been described a planar structure defining an AWG. But the invention also applies to hybridized components defining an AWG. Moreover, it has been described an AWG structure coupled to a single fibre array (or support means). But, the AWG structure may be coupled to another type of support means, and for example to a chip on which are defined one or several planar circuits, such as PLC, including external input/output waveguides.

## Claims

1. An Arrayed Waveguide Grating (AWG) device comprising a substrate (S) having first (C1) and second (C2) slab couplers defined thereon, an input/output side (SS), a first array (DWA1) of waveguides (DWi) defined thereon and optically coupled to first ends (CE11,CE21) of said first (C1) and second (C2) slab couplers, and second (IWA2) and third (OWA3) arrays of waveguides defined thereon and comprising first ends (IWE1,OWE1) abutting upon said input/output side (SS) and second ends (IWE2,OWE2) respectively optically coupled to second ends (CE12,CE22) of said first (C1) and second (C2) slab couplers, wherein it also comprises a single support means (FA) having a coupling side (FAS) facing said input/output side (SS) and provided with portions of first (IFG) and second (OFG) groups of at least one input/output external waveguides having first ends (IFE1,OFE1) abutting upon said coupling side (FAS) and being arranged so that at least one external waveguide (IFm) of said first group (IFG) be optically coupled to one second array waveguide (OWj) and at least one external waveguide of said second group (OFn) be optically coupled to a corresponding one of said third array waveguides (OWk).

2. AWG device according to claim 1, wherein the external waveguides are optical fibres and the support means is a holding block.

3. AWG device according to claim 1, wherein the support means is a chip comprising a planar circuit comprising the first (IFG) and second (OFG) groups of external waveguides.

4. AWG device according to claim 3, wherein the planar circuit is a planar lightwave circuit.

5. AWG device according to one of claims 1 to 4, wherein a first one of said second array waveguide first ends (IWE1) is placed at a chosen distance from a first one of said third array waveguide first ends (OWE1), and a first one of said first group external waveguide first ends (IFE1) is placed at said chosen distance from a first one of said second group external waveguide first ends (OFE1).

6. AWG device according to one claims 1 to 5, wherein said waveguide first ends of the second (IWA2) and third (OWA3) arrays are respectively spaced one from the other by a constant spacing, and the external waveguide first ends of the first (IFG) and second (OFG) groups are respectively spaced one from the other by said constant spacing.

7. AWG device according to claim 6, wherein, the first (DWA1), second (IWA2) and third (OWA3) waveguide arrays, and said first (C1) and second (C2) slab couplers define a vernier.

8. AWG device according to one of claims 1 to 7, wherein said spacing between said third array waveguide first ends (OWE1) is approximately equal to the spacing between said second array waveguide first ends (IWE1).

9. AWG device according to claim 8, wherein said second array (IWA2) comprises at least 1 + p waveguides (IWj), said second group (OFG) comprises M optical fibres (OFn) and said third array (OWA3) comprises at least M + p waveguides (OWk).

10. AWG device according to one of claims 1 to 7, wherein said spacing between said third array waveguide first ends (OWE1) is different from the spacing between said second array waveguide first ends (IWE1).

11. AWG device according to claim 10, wherein said second array (IWA2) comprises 1 + p waveguides (IWj), said third array (OWA3) comprises at least M + p waveguides (OWk), said first group (IFG) comprises at least 1 + p optical fibres (IFm), and said second group (OFG) comprises at least M + p optical fibres (OFn).

12. A method of coupling an Arrayed Waveguide Grating (AWG) to input/output external waveguides, **characterized in that** it comprises the steps of:
- providing a substrate (S) having first (C1) and second (C2) slab couplers defined thereon, an input/output side (SS), a first array (DWA1) of waveguides (DWi) defined thereon and optically coupled to first ends (CE11,CE21) of said first (C1) and second (C2) slab couplers, and second (IWA2) and third (OWA3) arrays of waveguides defined thereon and comprising first ends (IWE1,OWE1), abutting upon said input/output side (SS), and second ends (IWE2,OWE2) respectively optically coupled to second ends (CE12,CE2) of said first (C1) and second (C2) slab couplers,
- providing a single support means (FA) having a coupling side (FAS) and provided with portions of first (IFG) and second (OFG) groups of at least one input/output external waveguide (IFm,OFn) having first ends (IFE1,OFE1) abutting upon said coupling side (FAS),
- pre-positioning said support means (FA) so that its coupling side (FAS) faces said input/output side (SS),
- finely moving said support means (FA) along said substrate (S) to find a position in which at least one external waveguide (IFm) of said first group (IFG) is optically coupled to one second array waveguide (IWj) and at least one external waveguide (OFn) of said second group (OFG) is optically coupled to a corresponding one of said third array waveguides (OWk), and
- fixing said support means (FA) to said substrate (S) in said position.

13. Method according to claim 12, wherein said pre-positioning is made by machine-vision.

14. Method according to one of claims 12 and 13, wherein said fine moving is controlled by optical power monitoring.

15. Method according to claim 14, wherein said optical power monitoring comprises a step of determining a maximum of optical power at the output of said second group external waveguides (OFn) by moving said support means (FA) relatively to said substrate (S) in a plane (XY), and a second step of determining a maximum of optical power at the output of said second group external fibres (OFn) by moving said support means (FA) relatively to said substrate (S) in a direction (Z) perpendicular to said plane (XY).

16. Method according to claim 15, wherein said fine moving comprises a rotation step of said support means (FA) along a chosen direction.

17. Method according to one of claims 12 to 16, wherein it comprises at least one iteration of at least a part of the fine moving step.

18. Method according to one of claims 12 to 17, wherein said support means (FA) is fixed to said substrate (S) by gluing or welding or brazing.

19. Method according to one of claims 12 to 18, wherein said external waveguides are optical fibres and said support means is a holding block (FA).

20. Method according to one of claims 12 to 18, wherein said support means is a chip comprising a planar circuit comprising the first (IFG) and second (OFG) groups of external waveguides.

21. Method according to claim 20, wherein the planar circuit is a planar lightwave circuit.

22. Method according to one of claims 12 to 21, wherein a first one of said second array waveguide first ends (IWE1) is placed at a chosen distance from a first one of said third array waveguide first ends (OWE1), and a first one of said first group external waveguide first ends (IFE1) is placed at said chosen distance from a first one of said second group external waveguide first ends (OFE1).

23. Method according to one of claims 12 to 22, wherein said waveguide first ends of the second (IWA2) and third (OWA3) arrays are respectively spaced one from the other by a constant spacing, and the external waveguide first ends of the first (IFG) and second (OFG) groups are respectively spaced one from the other by said constant spacing.

24. Method according to claim 23, wherein, the first (DWA1), second (IWA2) and third (OWA3) waveguide arrays, and said first (C1) and second (C2) slab couplers define a vernier.

25. Method according to one of claims 12 to 24, wherein said spacing between said third array waveguide first ends (OWE1) is approximately equal to the spacing between said second array waveguide first ends (IWE1).

26. Method according to claim 25, wherein said second array (IWA2) comprises at least 1 + p waveguides (IWj), said second group (OFG) comprises M optical fibres (OFn) and said third array (OWA3) comprises at least M + p waveguides (OWk).

27. Method according to one of claims 12 to 24, wherein said spacing between said third array waveguide first ends (OWE1) is different from the spacing between said second array waveguide first ends (IWE1).

28. Method according to claim 27, wherein said second array (IWA2) comprises 1 + p waveguides (IWj), said third array (OWA3) comprises at least M + p waveguides (OWk), said first group (IFG) comprises at least 1 + p optical fibres (IFm), and said second group (OFG) comprises at least M + p optical fibres (OFn).
